# EUROPÄISCHE PATENTSCHRIFT

(11) **EP 4 405 580 B1**
(45) Veröffentlichungstag und Bekanntmachung des Hinweises auf die Patenterteilung: **26.11.2025**
(21) Anmeldenummer: 22769699.4
(22) Anmeldetag: 30.08.2022
(51) Int. Cl.: F02K 9/72, B63G 8/08, F02K 9/70

(54) **VERWENDUNG EINES RAKETENTREIBSTOFFS, ANTRIEBSVORRICHTUNG MIT EINEM RAKETENTREIBSTOFF UND UNTERWASSERTRANSPORTGERÄT**
USE OF A ROCKET PROPELLANT, DRIVE DEVICE WITH A ROCKET PROPELLANT AND UNDERWATER TRANSPORT DEVICE
UTILISATION D'UN MOTEUR-FUSÉE, DISPOSITIF D'ENTRAÎNEMENT À MOTEUR-FUSÉE ET DISPOSITIF DE TRANSPORT SOUS-MARIN

(30) Priorität: 26.09.2021 DE 102021124815; 15.08.2022 EP 22190345
(43) Veröffentlichungstag der Anmeldung: 31.07.2024
(73) Patentinhaber: Deutsches Zentrum für Luft- und Raumfahrt e.V., 53227 Bonn (DE)
(72) Erfinder: CIEZKI, Helmut Konrad, 74239 Hardthausen (DE)
(74) Vertreter: RPK Patentanwälte Reinhardt und Kaufmann Partnerschaft mbB
(86) Internationale Anmeldenummer: PCT/EP2022/074069
(87) Internationale Veröffentlichungsnummer: WO 2023/046426

(56) Entgegenhaltungen:
- EP-B1- 2 439 395
- DE-B4- 102005 030 437
- ANONYMOUS: "High Energy, low temperature gelled bi-propellant formulation for long-duration in-space propulsion", 31 December 2004 (2004-12-31), XP055983013, Retrieved from the Internet <URL:https://sbir.nasa.gov/SBIR/abstracts/04/sbir/phase1/SBIR-04-1-X6.05-7729.html> [retrieved on 20221118]

## Beschreibung

### Stand der Technik

Die Erfindung betrifft eine Verwendung eines Raketentreibstoffs, eine Antriebsvorrichtung mit einem Raketentreibstoff sowie ein Unterwassertransportgerät mit einer Antriebsvorrichtung.

Gelförmige Treibstoffe und ihre Anwendungen sind beispielsweise in den Artikeln "An Overview of Investigations on Gel Fuels for Ramjet Applications" von H. K. Ciezki und B. Natan, International Symposium on Airbreathing Engines, ISABE 2005, München, September 2005, "Theoretical approaches on the influence of non-linear material properties of gel propellants on the flow in injectors" von H. K. Ciezki et al., 33rd International Annual Conference of ICT, Karlsruhe, 2002, oder "The status of gel propellants in year 2000" von B. Natan und S. Rahimi, in Combustion of Energetic Materials, Editors K. K. Kuo, L. DeLuca, Boca Raton, 2001, oder B. Natan et al "Gel propellants," Progress in Energy and Combustion Science, Band 83, März 2021, beschrieben.

In der DE 102005030437 B4 sind Maßnahmen zu Verringerung der Viskosität von Brennstoffgelen in Raketentriebwerken beschrieben.

Im Gegensatz zu Festtreibstoffen oder flüssigen Treibstoffen für Raketenantriebe ermöglichen gelförmige Brennstoffe eine verbesserte Lagerfähigkeit und Handhabbarkeit.

Aus einer Veröffentlichung "High Energy, low temperature gelled bipropellant formulation for long-duration in-space propulsion", vom 31. Dezember 2004, XP55983013, mit der URL: https://sbir.nasa.gov/SBIR/abstracts/04/sbir/phase1/SBIR-04-1-X6.05-7729.html ist eine Antriebsvorrichtung eines Unterwassertransportgeräts bekannt, umfassend einen Tank mit einem gelförmigen Raketentreibstoff mit wenigstens einem Brennstoffgel und einem Oxidatorgel, mit einer Brennkammer, die in einer Schubdüse endet.

### Offenbarung der Erfindung

Eine Aufgabe ist es, eine Antriebsvorrichtung anzugeben, bei welcher ein gelförmige Raketentreibstoff eingesetzt wird.

Eine weitere Aufgabe ist es, ein Unterwassertransportgerät mit einer Antriebsvorrichtung anzugeben, bei welcher ein gelförmiger Raketentreibstoff eingesetzt wird.

Eine weitere Aufgabe der Erfindung ist es, eine Verwendung eines gelförmigen Raketentreibstoffs anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Im Folgenden steht der Begriff "Treibstoff" sowohl für monergole Treibstoffe als auch für diergole Treibstoffe, wobei auch Dreistoffsysteme (Triergole) oder weitere höhere Systeme eingeschlossen sein sollen.

Generell werden Raketentreibstoffe, die keine separate Zündung benötigen, sondern sich selbst für die Umsetzung genügen, als hypergol bezeichnet.

Ferner umfasst der Begriff Triebwerk sowohl ein Triebwerk mit einem Raketentriebwerksmode als auch ein Triebwerk mit einem Staustrahltriebwerksmode, sowie ein Triebwerk mit einem Staustrahlraketentriebwerksmode.

Nach einem Aspekt der Erfindung wird eine Antriebsvorrichtung eines Unterwassergeräts umfassend wenigstens einen Tank mit einem gelförmigen Raketentreibstoff mit wenigstens einem Brennstoffgel und einem Oxidatorgel mit einer Brennkammer vorgeschlagen, die in einer Schubdüse endet.

Wenigstens ein Wassereinlass in die sekundäre Verbrennungszone und/oder in die Mischzone ist mit einem Wassereinlassaktor abhängig von einer Geschwindigkeit des Unterwassertransportgeräts einstellbar. Auf diese Weise kann zusätzlich zur unabhängigen Einstellung des Massenstroms von Brennstoffgel und des Massenstroms von Oxidatorgel durch die Einstellung des Massenstroms von Wasser in die Brennkammer der Schub der Antriebseinrichtung eingestellt werden. Der Wassereinlassaktor kann ein einfacher Einlassverschluss sein, der den Wassereinlass lediglich vollständig öffnet oder vollständig verschließt. Optional kann der Wassereinlassaktor stufenlos oder in mehreren Stufen regelbar sein. Ein Wassereinlassaktor kann an einem oder mehreren Wassereinlässen in die Brennkammer vorgesehen sein oder irgendwo im Wasserzuführungskanal stromauf des Wassereinlassbereiches. Zusätzlich oder alternativ können auch Wasserverteilungsaktoren in Verzweigungen der Wasserzuführungen eingesetzt werden.

Die eingesetzte Antriebsvorrichtung weist vorteilhaft besonders kompakte Abmessungen auf. So können minimale Dimensionen für ein Unterwassertransportgerät mit einer solchen Antriebsvorrichtung von höchstens 10 m, insbesondere von höchstens 4 m bis 6 m oder auch kürzer, erreicht werden.

Natürlich können auch größere Unterwassertransportgeräte mit einer solchen Antriebsvorrichtung betrieben werden. Denkbar ist auch, mehrere Antriebsvorrichtungen kombiniert zum Antrieb eines solchen Unterwassertransportgeräts einzusetzen.

Vorteilhaft kann eine schubgeregelte Antriebsvorrichtung geschaffen werden, die hohe Geschwindigkeiten unter Wasser erreichen kann. Insbesondere sind Geschwindigkeiten möglich, die Kavitation oder Superkavitation um das Unterwassertransportgerät hervorruft. Das Unterwassertransportgerät kann sich dabei im Wasser praktisch von einer Gasblase umgeben fortbewegen, was besonders strömungsgünstig ist.

Die vorgeschlagene Antriebsvorrichtung weist vorteilhaft besonders kompakte Abmessungen auf. So können minimale Dimensionen für ein Unterwassertransportgerät mit einer solchen Antriebsvorrichtung von höchstens 10 m, insbesondere von 4 m bis 6 m oder in bestimmten kleinen Ausführungen sogar kürzer, erreicht werden. Natürlich können auch größere Unterwassertransportgeräte wie zum Beispiel U-Boote mit einer solchen Antriebsvorrichtung betrieben werden. Denkbar ist auch, mehrere Antriebsvorrichtungen kombiniert zum Antrieb eines solchen Unterwassertransportgeräts einzusetzen.

Günstigerweise kann die Antriebsvorrichtung als Staustrahltriebwerk mit einem diergolen Gel-Dualmode-Gasgenerator mit Brennstoffgel und einem Oxidatorgel ausgebildet sein (auch genannt Staustrahlraketentriebwerk). Der Gasgenerator stellt eine Baueinheit dar, in der Brennstofftank Oxidatortank, Regelventile für Brennstoff und Oxidator, Injektorkopf, etwaigem Zünder, sowie eine Vorbrennkammer mit einer primären Verbrennungszone, in der der primäre Verbrennungsprozess abläuft, integriert sind.

Vorteilhaft kann eine schubgeregelte Antriebsvorrichtung geschaffen werden, die hohe Geschwindigkeiten unter Wasser erreichen kann und die durch den gelfömigen Treibstoff eine hohe Betriebssicherheit aufweist.

Alternativ kann statt eines Gel-Dualmode-Gasgenerators eine Antriebsvorrichtung mit einer Gel-Dualmode-Treibstoffförderung vorgesehen sein, bei der der Injektorkopf mit etwaigem Zünder in der Brennkammer angeordnet ist.

Günstigerweise kann der Schubdüse ein diergoler Gel-Dualmode-Gasgenerator oder eine Gel-Dualmode-Treibstoffförderung für das Brennstoffgel und das Oxidatorgel vorgeschaltet sein. Dies erlaubt eine kompakte Bauweise.

Günstigerweise können separate, unabhängig voneinander betreibbare Regelventile zur Zufuhr von Brennstoffgel und zur Zufuhr von Oxidatorgel zu der Brennkammer unabhängig voneinander betreibbar sein. Dies erlaubt, dass je nach Fahrmode des Unterwassertransportgeräts ein günstiges Verhältnis von Brennstoff zu Oxidator eingestellt werden kann.

Günstigerweise kann der Treibstoff aus Brennstoffgel und das Oxidatorgel in separaten Tanks angeordnet sein. Insbesondere kann der eine der Tanks den anderen der Tanks konzentrisch umgeben. Dies ergibt eine sehr kompakte Bauweise. Optional sind auch andere Anordnungen der Tanks möglich, beispielsweise nebeneinander oder hintereinander angeordnet. Die Anordnung der Tanks kann vorteilhaft an den vorhandenen Bauraum im Unterwasserstransportgerät angepasst werden.

Günstigerweise kann eine Kolbenbetätigungseinheit zur Betätigung von Kolben in dem wenigstens einen Tank angeordnet sein. Insbesondere kann die Kolbenbetätigungseinheit eine Druckgaserzeugungseinheit und eine Druckkammer aufweisen.

Günstigerweise können die Kolben mit hohem Druck betätigt werden. Dazu kann die Kolbenbetätigungseinheit eine Druckerzeugungseinheit sowie eine Druckkammer aufweisen, die mit den Kolben in Wirkverbindung steht. Optional sind auch andere Betätigungsweisen zur Betätigung der Kolben denkbar, etwa eine mechanische Kraftübertragung oder dergleichen. Dies kann günstig für den jeweiligen Einsatzzweck des Unterwassertransportgeräts ausgewählt werden. Der Druck auf die Kolben überschreitet dabei den Druck in der Brennkammer.

Günstigerweise kann die Brennkammer einen Injektorkopf, zumindest eine primäre Verbrennungszone und eine Mischzone umfassen. Insbesondere kann eine sekundäre Verbrennungszone zwischen primärer Verbrennungszone und Mischzone angeordnet sein. Die sekundäre Verbrennungszone ist besonders günstig, wenn im Brennstoffgel Metallzusätze vorhanden sind. Zwischen Brennkammer und dem Expansionsteil der Düse kann auch ein Gasleitrohr angeordnet sein, das es erlaubt, Steuerungseinrichtungen im hinteren Teil des Unterwassertransportgeräts zu platzieren.

Günstigerweise kann wenigstens ein Wassereinlass in wenigstens eine Zone der Brennkammer vorhanden sein. Optional kann wenigstens ein Wassereinlass in die sekundäre Verbrennungszone oder in die sekundäre Verbrennungszone und in die Mischzone vorhanden sein.

Durch den Wassereinlass in die sekundäre Verbrennungszone oder in die sekundäre Verbrennungszone und in die Mischzone lässt sich eine besonders effektive Verbrennung des Treibstoffs und insbesondere seiner Metallbestandteile erreichen, wenn der Treibstoff einen metallischen Zusatz enthält, und damit eine hohe Schubkraft. Der Einsatz von Wasser im Staustrahltriebwerksmode (auch bekannt als Ramjet-Mode) ermöglicht es, Oxidator(gel) einzusparen und damit eine Steigerung der Reichweite zu erreichen.

Eine Verwendung eines gelförmigen Raketentreibstoffs zum Antrieb eines Unterwassertransportgeräts ist besonders vorteilhaft, um eine schubgeregelte, betriebssichere Antriebseinheit eines Unterwassertransportgerät bereitzustellen, die hohe Geschwindigkeiten zulässt.

Nach einem weiteren Aspekt der Erfindung wird ein Unterwassertransportgerät vorgeschlagen mit einer erfindungsgemäßen Antriebsvorrichtung, wobei die Antriebsvorrichtung als Staustrahltriebwerk mit einem diergolen Gel-Dualmode-Gasgenerator oder einer Gel-Dualmode-Treibstoffförderung mit Brennstoffgel und einem Oxidatorgel zum Antrieb mit einem diergolen Raketentreibstoff ausgebildet ist.

Vorteilhaft kann das vorgeschlagene Unterwassertransportgerät mit einer solchen schubgeregelten Antriebsvorrichtung hohe Geschwindigkeiten unter Wasser erreichen. Insbesondere sind Geschwindigkeiten möglich, die Kavitation oder Superkavitation um das Unterwassertransportgerät hervorruft. Das Unterwassertransportgerät kann sich dabei im Wasser praktisch von einer Gasblase umgeben fortbewegen, was besonders strömungsgünstig ist.

Günstigerweise kann das Unterwassertransportgerät mit separaten, unabhängig voneinander betreibbaren Regelventilen zur Zufuhr von Brennstoffgel und zur Zufuhr von Oxidatorgel zu einer Brennkammer der Antriebsvorrichtung ausgestattet sein.

Es wird nach einem weiteren Aspekt der Erfindung eine Verwendung von gelförmigem, dieergolen Raketentreibstoff, aufweisend ein Brennstoffgel und ein Oxidatorgel als Treibstoff zum Antrieb eines Unterwassertransportgeräts vorgeschlagen.

Der Begriff "Treibstoff" steht sowohl für monergole Treibstoffe als auch für diergole Treibstoffe, wobei auch Dreistoffsysteme (Triergole) oder weitere höhere Systeme eingeschlossen sein sollen.

Ein monergoler Raketentreibstoff kann eine einzelne Treibstoff-Spezies oder eine Mischung verschiedener Spezies sein, die sich selbst für die Umsetzung genügt. Ein diergoler Raketentreibstoff besteht in der Regel aus einem Brennstoff und einem Oxidator. Beide können jeweils eine einzelne Spezies von Brennstoff und Oxidator oder eine Kombination mehrerer Spezies derselben sein.

Eine Verwendung eines gelförmigen Raketentreibstoffs zum Antrieb eines Unterwassertransportgeräts ist besonders vorteilhaft, um eine schubgeregelte, betriebssichere Antriebseinheit eines Unterwassertransportgerät bereitzustellen, die hohe Geschwindigkeiten zulässt.

Gele sind nicht-newtonsche Fluide, deren rheologisches Verhalten scherratenabhängig und/oder dehnratenabhängig sowie thixotrop ist. Zwar gibt es keine strenge Definition für ein Gel, jedoch kann ein Gel in guter Näherung als Medium angesehen werden, welches ein kolloidales strukturelles Netzwerk aufweist, das eine kontinuierliche Matrix hat und die flüssige Phase vollständig durchdringt.

Auf der Basis von gelförmigem Treibstoff können schubregelbare Triebwerke bereitgestellt werden. Damit kann bei Unterwasseranwendungen günstigerweise eine Geschwindigkeit des Unterwassertransportgeräts geregelt werden. Insbesondere lassen sich kleine, kompakte Triebwerke bauen. Gelförmige Treibstoffe verhalten sich unter normalen Umgebungsbedingungen ähnlich wie Feststoffe und lassen sich deshalb einfach lagern und handhaben. Unter Scherspannungseinfluss, der in der Geometrie der Förderleitungen und des Injektorkopfs infolge des Förderdrucks hervorgerufen wird, werden sie fließfähig; dies ermöglicht es, eine Durchsatzsteuerung durchzuführen, über die wiederum eine Schubsteuerung möglich ist. Weiterhin erlauben gelförmige Treibstoffe im Gegensatz zu Festtreibstoffen eine Mehrfachabschaltung und Mehrfachzündung. Gelförmige Treibstoffe können verhältnismäßig gefahrlos gehandhabt werden und es lässt sich eine hohe Unempfindlichkeit beispielsweise gegenüber Leckagen erreichen.

Im Vergleich dazu sind Feststoff-Treibstoffe zwar lagerungsfähig und weisen eine gute Handhabung auf, jedoch kann die Verbrennung nach dem Zünden nicht mehr gestoppt werden, und üblicherweise sind entsprechende Triebwerke auch nicht oder nur äußerst schwierig und aufwändig und auch dann nur sehr begrenzt regelbar. Flüssigkeits-Triebwerke wiederum sind regelbar, jedoch ist die Sensitivität gegenüber Leckagen sehr groß, und es ist ein großer Aufwand bezüglich der Förderung notwendig. Durch Antriebsvorrichtungen auf der Basis von gelförmigen Treibstoffen lassen sich die positiven Eigenschaften von Feststoffantrieben und Flüssigkeitsantrieben verbinden.

Ein gelförmiger Brennstoff kann durch Vergelung eines Brennstoffs erreicht werden. Geliermittel sind in der Regel organische Stoffe wie Cellulosederivate, Pektin, Stärke, Agar, Gelatine usw. oder anorganische oder reaktionsarme Partikel. Diese Partikel können hauptsächlich im Submikronbereich angesiedelt sein, wie z.B. pyrogene Kieselsäure (Aerosil, Cabosil usw.), Nanopartikel aus Aluminium (z. B. ALEX) oder Kohlenstoff-Nanoröhren (CNT).

Ein besonderer Vorteil bei gelförmigen Raketentreibstoffen ist die Möglichkeit, umweltverträglichere Stoffe einsetzen zu können und damit auf gefährliche und aggressive Bestandteile wie Hydrazin und seine Derivate, N₂O₄ (NTO) oder HNO₃ verzichten zu können. Solche gelförmigen Raketentreibstoffe werden in der Literatur auch als "grüne" Treibstoffe bezeichnet. Ein weiterer Vorteil ist die langfristige Lagerfähigkeit der gelförmigen Treibstoffe, wenn Bestandteile ausgeschlossen werden, die autokatalytische Prozesse aufweisen, anderweitig chemisch instabil sind oder bei Umgebungstemperatur und Umgebungsdruck nicht ohne weiteres lange Zeit gelagert werden sollten, wie beispielsweise N₂O, das unter Druck gelagert werden muss.

Weitere Vorteile gelförmiger Treibstoffe sind ihre Unempfindlichkeit gegenüber versehentlichem Zünden, gegenüber Stoßeinwirkung, elektrischer Entladung, Sedimentation beispielsweise von Metallpartikeln im Treibstoff, Verdampfung und Schwappen des Treibstoffs.

Günstigerweise kann der gelförmige Treibstoff wenigstens ein Brennstoffgel aufweisen. Insbesondere kann der Treibstoff das Brennstoffgel und ein Oxidatorgel aufweisen.

Es kann sich auch um eine Kombination verschiedener Brennstoffe handeln, von denen mindestens einer gelförmig ist bzw. um eine Kombination verschiedener Oxidatoren, von denen mindestens einer gelförmig ist.

Günstigerweise kann das Brennstoffgel wenigstens einen metallhaltigen Zusatz, insbesondere einen wasserreagierenden metallhaltigen Zusatz, aufweisen.

Insbesondere kann der metallhaltige Zusatz Metallpartikel, insbesondere Magnesiumpartikel und/oder Aluminiumpartikel, und/oder Metallhydrid umfassen, insbesondere Aluminiumhydrid und/oder Lithiumhydrid. Der metallhaltige Zusatz erlaubt vorteilhaft eine Erhöhung des Schubs des Unterwassertransportgeräts.

Günstigerweise kann der Treibstoff als Brennstoffgel wenigstens einen Kohlenwasserstoff, insbesondere n-Heptan und/oder Kerosin, aufweisen. Auch andere Kohlenwasserstoffe sind denkbar. Ebenso können Mischungen von Kohlenwasserstoffen eingesetzt werden, von denen wenigstens einer gelförmig ausgebildet ist.

Günstigerweise kann der Treibstoff wenigstens ein Oxidatorgel, insbesondere Wasserstoffperoxid und/oder ionische Liquide auf der Basis von Ammoniumdinitramid und/oder Hydroxylammoniumnitrat, aufweisen. Auch andere Oxidatoren sind denkbar. Ebenso können Mischungen von Oxidatoren eingesetzt werden, von denen wenigstens einer gelförmig ausgebildet ist.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: schematisch einen Längsschnitt durch ein Triebwerk mit einem monergolen Treibstoffgel nach dem Stand der Technik;
- Fig. 2: schematisch einen Längsschnitt durch ein diergoles Gel-Dualmode-Triebwerk nach einem Ausführungsbeispiel der Erfindung mit Brennstoff und Oxidator;
- Fig. 3: schematisch einen Längsschnitt durch ein diergoles Gel-Dualmode-Triebwerk nach einem Ausführungsbeispiel der Erfindung mit einem Gasgenerator mit Brennstoff und Oxidator;
- Fig. 4: einen prinzipiellen Verlauf von Masseströmen von Brennstoffgel, Oxidatorgel und Wasser in verschiedenen Fahrmoden mit Anfangs-Beschleunigungsphase, Reisephase und Endbeschleunigungsphase mit offener Wasserzuführung während der Reisephase und der Endbeschleunigungsphase in einem Triebwerk nach einem Ausführungsbeispiel der Erfindung;
- Fig. 5: einen prinzipiellen Verlauf von Masseströmen von Brennstoffgel, Oxidatorgel und Wasser in verschiedenen Fahrmoden mit Anfangs-Beschleunigungsphase, Reisephase und Endbeschleunigungsphase mit offener Wasserzuführung nur während der Reisephase in einem Triebwerk nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

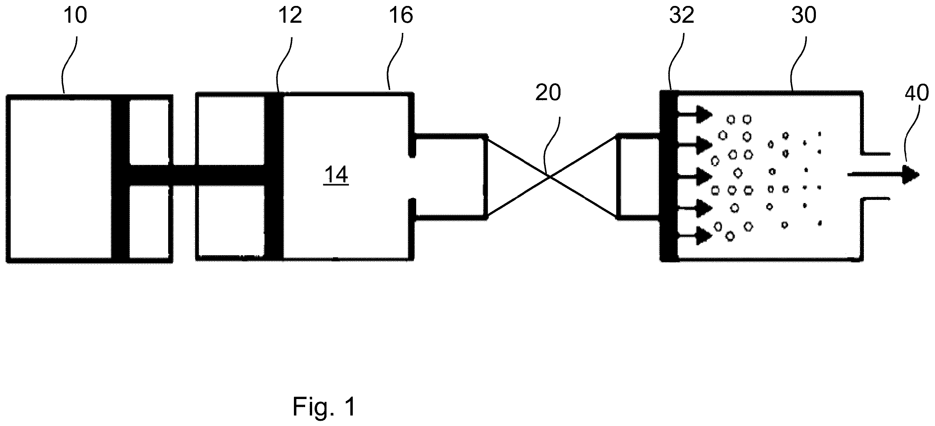

Figur 1 zeigt schematisch einen Längsschnitt durch ein Raketentriebwerk mit einem monergolen Treibstoffgel als Treibstoff 14 nach dem Stand der Technik.

Der Tank 16 ist von der Brennkammer 30 getrennt. Ähnlich wie bei Feststoffraketenmotoren weist der Treibstoff 14 in Form von Brennstoffgel eine im Wesentlichen feste Beschaffenheit auf, solange er im Tank 16 ruht.

Der im Wesentlichen feste Zustand des Treibstoffs 14 in dem Tank 16 verringert das Gefahrenpotenzial von Raketentreibstoffen erheblich, da der gelierte Treibstoff 14 im Falle einer Beschädigung oder eines Unfalls nicht ausläuft, keine große Verdampfungsfläche bildet, einen viel geringeren Dampfdruck als eine ungelierte Flüssigkeit hat und nicht so einfach in den Boden eindringt.

Folglich sind gelierte Raketentreibstoffe viel sicherer als flüssige Treibstoffe, Brennstoffe oder Oxidationsmittel und weisen eine bessere Unempfindlichkeit auf als Festtreibstoffe.

Der Treibstoff 14 wird durch einen Kolben 12 unter Druck gesetzt und der Brennkammer 30 über einen Injektorkopf 32 zugeführt. Der Druck auf den Kolben wird üblicherweise über einen Gasgenerator 10 erzeugt.

Der Verbrennungsgasstrom 40 aus der Brennkammer 30 sorgt für den Schub des Raketenantriebs.

Zum Starten des Raketenantriebs sind drei unabhängige Funktionen erforderlich: Druckbeaufschlagung des Tanks 16, Öffnen des Steuerventils 20 und Betätigung des Zünders (nicht dargestellt) in der Brennkammer 30.

Ein unbeabsichtigter oder versehentlicher Start des Triebwerks, der bei Feststoffraketenmotoren ein kritischer Punkt ist, ist nicht möglich, und eine Zündsicherung ist daher nicht erforderlich.

Ein Beispiel eines gelförmigen Brennstoffs in einem diergolen Treibstoff ist ein Paraffin-Gel. Ein Paraffin-Gel in einer häufig eingesetzten Zusammensetzung setzt sich aus Paraffin, 7,5 Gew.-% Thixatrol ST und 7,5 Gew.-% Methylisoamylketon (MIAK) zusammen. Monergole Treibstoffgele können aus einer einzigen Spezies wie zum Beispiel Isopropylnitrat bestehen, die sich selbst bei der Umsetzung genügt, aber auch Mischungen verschiedener Brennstoffe mit Oxidatoren sein.

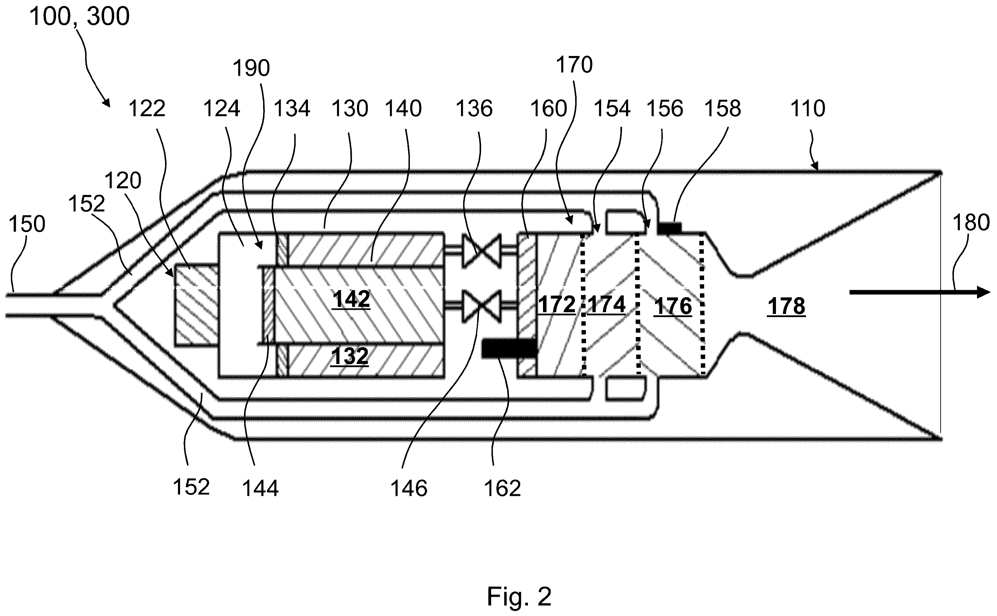

Figur 2 zeigt schematisch einen Längsschnitt durch ein diergoles Gel-Dualmode-Triebwerk als Antriebsvorrichtung 100 mit einem gelförmigen Raketentreibstoff zur Verwendung als Treibstoff mit einem Brennstoffgel 132 und einem Oxidatorgel 142 für eine Brennkammer 170 für ein Unterwassertransportgerät 300 nach einem Ausführungsbeispiel der Erfindung.

Vorteilhaft sind Geltriebwerke kompakter als beispielsweise Hybridraketentriebwerke und daher besonders für volumenlimitierte Systeme von Vorteil.

Die räumliche Trennung von Oxidatorgel 132 und Brennstoffgel 142 in separaten Tanks 130, 140 erhöht die Sicherheit gegen unbeabsichtigte Zündung, elektrostatische Entladungen, Erschütterungen, etc.

Der gelförmige Zustand der beiden Komponenten Brennstoff und Oxidator verhindert bei Leckagen ein Auslaufen und ein Vermischen, was eine deutlich höhere Sicherheit gegenüber unbeabsichtigter Zündung und Verbrennen ist.

Der Gelzustand verhindert auch ein einfaches Einsinken in den Boden im Falle von Leckagen, was deutlich umweltfreundlicher ist als bei Flüssigtreibstoffen.

Der Gel-Zustand des Brennstoffes verhindert eine Sedimentation von zugesetzten Metallpartikeln, welche den Schub der Antriebsvorrichtung vorteilhaft erhöhen.

Ein günstiges Brennstoffgel 132 weist wenigstens einen Kohlenwasserstoff auf, beispielsweise n-Heptan und/oder Kerosin.

Ein günstiges Oxidatorgel 142 weist beispielsweise Wasserstoffperoxid und/oder ionische Liquide auf der Basis von Ammoniumdinitramid und/oder Hydroxylammoniumnitrat auf.

Ein günstiger metallhaltiger Zusatz weist beispielsweise Metallpartikel, insbesondere Magnesiumpartikel und/oder Aluminiumpartikel, und/oder Metallhydrid auf, insbesondere Aluminiumhydrid und/oder Lithiumhydrid. Der metallhaltige Zusatz kann mit der Brennkammer 170 zugeführtem Wasser reagieren.

Die Antriebsvorrichtung 100 weist in einem Gehäuse 110 ein diergoles Gel-Dualmode-Raketentriebwerk auf, das abhängig von seiner Geschwindigkeit in einem Raketentriebwerksmode und in einem Staustrahltriebwerksmode betrieben werden kann. Eine Tankeinheit 190 beinhaltet Brennstoffgel 132 und Oxidatorgel 142, die dann in der Brennkammer 170 umgesetzt werden und bildet eine Gel-Dualmode-Treibstoffförderung. Die Tanks 130, 140 sind in diesem Beispiel konzentrisch angeordnet, wobei beispielhaft der Oxidatortank 140 von dem Brennstofftank 130 umgeben ist. Optional kann der Brennstofftank 130 vom Oxidatortank 140 umgeben sein oder eine andere Anordnung der Tanks 130, 140 gewählt sein, etwa zwei nebeneinander angeordnete Rohre. Optional können Membrantanks eingesetzt werden. Bei Membrantanks trennt eine Membran den Brennstoff bzw. den Oxidator im Tank von einem Druckgas, das den jeweiligen Stoff aus dem Tank in ein Fördersystem einbringt.

Das Brennstoffgel 132 und das Oxidatorgel 142 in den Tanks 130, 140 werden mittels Kolben 134, 144 mit einem Druck beaufschlagt, der höher als der Brennkammerdruck in der Brennkammer 170 ist.

Die Kolben 134, 144 werden dabei von einer Kolbenbetätigungseinheit 120 betätigt, die in diesem Beispiel eine Druckgaserzeugungseinheit 122 und eine Druckkammer 124 aufweist.

Die Zufuhr des Brennstoffgels 132 in die Brennkammer 170 wird über ein Regelventil 136 geregelt, während die Zufuhr des Oxidatorgels 142 in die Brennkammer 170 über ein separates Regelventil 146 geregelt wird. Beide Regelventile 136, 146 sind unabhängig voneinander betreibbar. Daher kann ein beliebiges Verhältnis der Massenströme von Brennstoffgel 132 und Oxidatorgel 142 eingestellt werden.

Brennstoffgel 132 und Oxidatorgel 142 gelangen über einen Injektorkopf 160 in die Brennkammer 170, wobei beim Einspritzvorgang über den Injektorkopf 160 in eine primäre Verbrennungszone 172 eine Verflüssigung von Brennstoffgel 132 und Oxidatorgel 142 erfolgt. In der primären Verbrennungszone 172 erfolgt die Zündung von Brennstoff und Oxidator mittels eines Zünders 162. Optional kann auch eine hypergole Kombination von Brennstoff und Oxidator eingesetzt werden. Das Verbrennungsgemisch gelangt über die Mischzone 176, in der das zugeführte Wasser 156 verdampft wird, zur Schubdüse 178, aus der der Verbrennungsgasstrom 180 ausgestoßen wird.

Insbesondere, wenn das Brennstoffgel 132 mit metallhaltigen Zusätzen versehen ist, ist eine Wasserzufuhr in die Brennkammer 170 vorteilhaft. Wasser umgibt das Unterwassertransportgerät und wird insbesondere im Betrieb als Staustrahltriebwerk mit Druck über einen Wassereinlass 150 Wasserzuführungskanälen 152 zugeführt.

Über einen zu der primären Verbrennungszone 172 stromabwärts angeordneten Wassereintritt 154 gelangt das Wasser in eine sekundäre Verbrennungszone 174 der Brennkammer 170 und über einen zu der sekundären Verbrennungszone 174 stromabwärts angeordneten Wassereintritt 156 in eine Mischzone 176 der Brennkammer 170.

Die Wasserzufuhr durch die Wassereintritte 154 und 156, bzw. alle vorhandenen Wassereinlässe, kann mittels eines oder mehrerer Wassereinlassaktoren 158, beispielsweise einer Verschlussklappe, freigegeben oder unterbunden werden. In der Figur ist beispielhaft der Übersichtlichkeit halber nur ein Wassereinlassaktor 158 für die Wassereintritte 154, 156 eingezeichnet. Die Strömungsgeschwindigkeit des Wassers kann beispielsweise durch geeignete Erweiterungen oder Verengungen in den Wasserkanälen 152 beeinflusst werden.

Weist das Brennstoffgel 132 keine Metallzusätze auf, ist keine sekundäre Verbrennungszone 174 ausgebildet und es erfolgt eine Wasserzufuhr nur in die Mischzone 176 der Brennkammer 170.

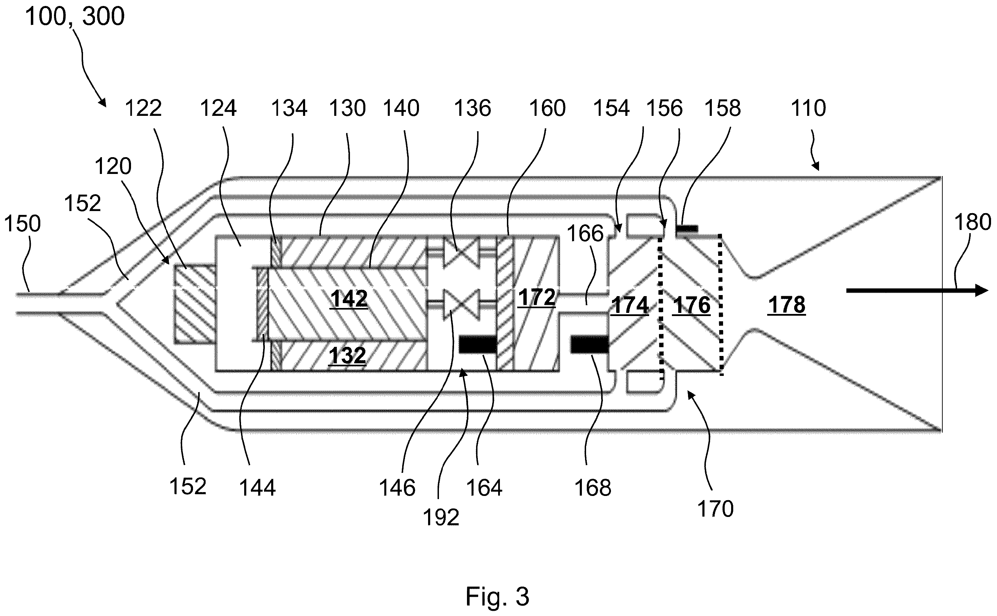

Figur 3 zeigt schematisch einen Längsschnitt durch ein diergoles Gel-Dualmode-Triebwerk als Antriebsvorrichtung 100 mit einem gelförmigen Raketentreibstoff zur Verwendung als Treibstoff mit einem Brennstoffgel 132 und einem Oxidatorgel 142 für eine Brennkammer 170 für ein Unterwassertransportgerät 300 nach einem Ausführungsbeispiel der Erfindung.

Vorteilhaft sind Geltriebwerke kompakter als beispielsweise Hybridraketentriebwerke und daher besonders für volumenlimitierte Systeme von Vorteil.

Die Figur zeigt das Unterwassertransportgerät 300 in der Ausführung, in der ein diergoler Gel-Gasgenerator 192 mit Brennstoffgel 132 und Oxidatorgel in die Brennkammer 170 feuert. Der Gel-Gasgenerator 192 weist ähnliche Komponenten wie bei der Ausführung in Figur 2 auf und umfasst Fördereinrichtungen für das Brennstoffgel 132 aus dem Brennstofftank 130 und das Oxidatorgel 142 aus dem Oxidatortank 140, Regelventile 136, 146, Injektorkopf 160 und Zünder 164. Der Gel-Gasgenerator 192 umfasst ferner eine Vorbrennkammer mit der primären Verbrennungszone 172, in der der primäre Verbrennungsprozess abläuft.

In der primären Verbrennungszone 172 kann optional eine hypergole Treibstoff-Kombination vorliegen, so dass kein separater Zünder 164 benötigt wird.

Dieser Gasgenerator 192 ist über ein Gasleitrohr 166 mit der Hauptbrennkammer 170 verbunden. Optional kann ein Regelventil den Gaszutritt in die Hauptbrennkammer 170 steuern. In der Hauptbrennkammer 170 befindet sich die sekundäre Verbrennungszone 174 mit dem zugeführten Wasser und nachfolgend die Mischzone 176. Dieser Aufbau ist zwar komplexer und schwerer, hat jedoch den Vorteil der Entkopplung von primärer und sekundärer Verbrennungszone 172, 174.

Auch in der sekundären Verbrennungszone 174 kann optional eine hypergole Wasser-Gasgeneratorabgas-Kombination vorliegen, so dass kein separater Zünder 168 benötigt wird.

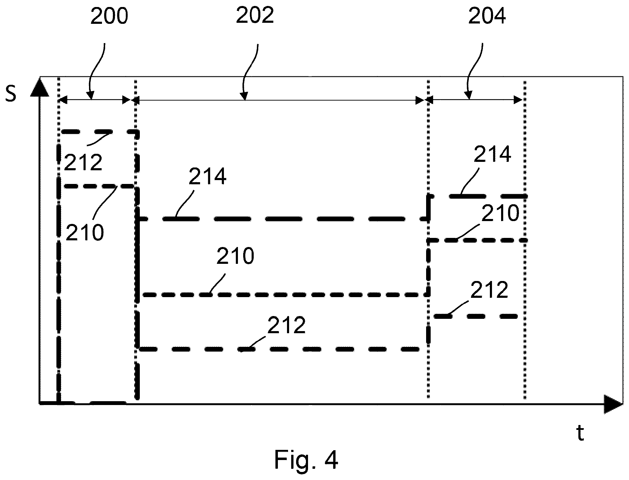

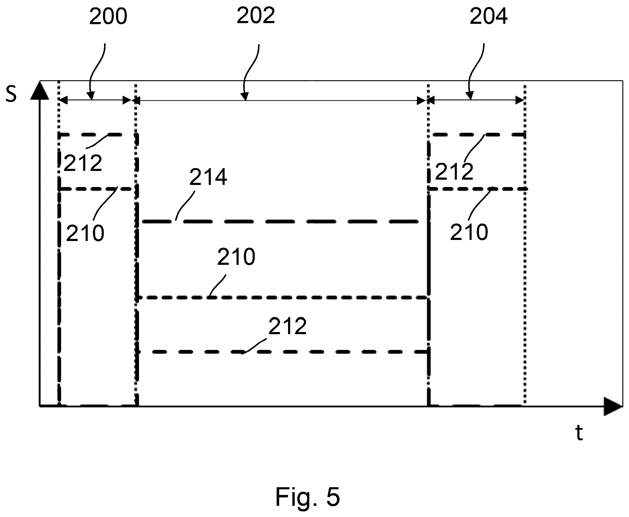

Wie die Figuren 4 und 5 zeigen, können abhängig von einer Geschwindigkeit des Unterwassertransportgeräts 300 die Massenströme von Brennstoff, Oxidator und Wasser eingestellt werden.

Figur 4 zeigt einen prinzipiellen Verlauf der Masseströme von Brennstoff aus verflüssigtem Brennstoffgel 132, Oxidator aus verflüssigtem Oxidatorgel 142 und Wasser in verschiedenen Fahrmoden mit Anfangs-Beschleunigungsphase 200, einer Reisephase 202 und einer optionalen Endbeschleunigungsphase 204 des Unterwassertransportgeräts 300.

In der Anfangs-Startphase 200 ist die Wasserzufuhr geschlossen, und der Oxidator verbrennt den Brennstoff mit metallhaltigem Zusatz in der Brennkammer 170, der ein Massestrom 210 des Brennstoffs und ein Massestrom 212 des Oxidators 142 über die Regelventile 136, 146 zugeführt wird. Der Betriebszustand wird Raketentriebwerksmode genannt.

Die Geschwindigkeit erhöht sich dabei bis zu einer Reisegeschwindigkeit in der Reisephase 202. In der Reisephase 202 ist die Wasserzufuhr in die Brennkammer 170 geöffnet und ein Wasser-Massenstrom 214 gelangt in die Brennkammer 170. Der Betriebszustand wird Staustrahltriebwerksmode genannt. Der metallhaltige Zusatz im Brennstoff wird in der sekundären Verbrennungszone 174 mit Wasser verbrannt, was die Abgastemperatur erhöht. In der Mischzone 176 wird weiteres Wasser zugeführt, welches verdampft, und ein Abgasstrom 180 über die Schubdüse 178 ausgestoßen.

In der Anfangs-Beschleunigungsphase 200 sind Brennstoffgel-Massenstrom 210 und Oxidatorgel-Massenstrom 212 beide sehr hoch. Ob der Oxidator-Massenstrom 212 höher oder niedriger als der Brennstoff-Massenstrom 210 ist, kann abhängig von den verwendeten Stoffen für Brennstoff und Oxidator eingestellt werden.

In der Reisephase wird die Zufuhr von Oxidatorgel-Massenstrom 212 wie auch der Brennstoffgel-Massenstrom 210 reduziert, wobei der Oxidatorgel-Massenstrom 212 jetzt sehr viel geringer ist als der Oxidatorgel-Massenstrom 212 in der Anfangs-Beschleunigungsphase 200.

Auch hier kann der jeweilige Massenstrom abhängig von den verwendeten Stoffen für Brennstoff und Oxidator eingestellt werden.

Optional ist eine Beschleunigungsphase 204 möglich, falls eine Erhöhung der Geschwindigkeit über die Reisegeschwindigkeit hinaus erwünscht ist. Dabei kann der Wasser-Massenstrom 214 wie auch der Brennstoff-Massenstrom 210 und der Oxidator-Massenstrom 212 erhöht werden.

In der Anfangs-Beschleunigungsphase 200 wirkt die Antriebsvorrichtung 100 als Gel-Raketenantrieb. In der Reisephase 204 wirkt die Antriebsvorrichtung 100 dagegen als sogenannter Gel-Wasser-Staustrahlraketenantrieb (Gel-Wasser-Ram(jet)-Raketenantrieb, Ramjet-Antrieb oder Ramjet-Mode, engl. Ram Rocket Propulsion System).

Ein sogenannter Ram-Raketenantrieb mit dem diergolen Gel-Dualmode-Gasgenerator 192 oder der diergolen Tankeinheit 190, dessen Brennstoff vorteilhaft mit wasserreagierenden Metallzusätzen versehen ist, eröffnet die Möglichkeit, ein jeweils optimales Massenstromverhältnis von Oxidatorgel 142 zu Brennstoffgel 132 und damit einen optimalen Schub sowohl für die Anfangs-Beschleunigungsphase 200 (Boostphase) als auch für die Reisephase 202 bereitzustellen.

Durch die Reduktion des Oxidatorgel-Massenstroms 212 beim Umschalten auf den Ramjet-Mode wird die Reaktion zwischen metallhaltigem Zusatz und Oxidator reduziert und die Reaktion zwischen Wasser und metallhaltigem Zusatz kann stattfinden. In der Boost-Phase 200 ist der Wassereinlauf geschlossen, sodass durch sehr hohe Brennstoff- und Oxidator-Massenströme ein sehr hoher Brennkammerdruck und damit auch ein hoher Schub realisierbar ist.

Figur 5 zeigt einen prinzipiellen Verlauf von Masseströmen von Brennstoff, Oxidator und Wasser in den verschiedenen Fahrmoden entsprechend Figur 4 mit Anfangs-Beschleunigungsphase 200, Reisephase 202 und optionaler zweiten Beschleunigungsphase 204, wobei die Wasserzufuhr nur während der Reisephase 202 erfolgt.

Bei der zweiten Beschleunigungsphase 204 müssen die Massenströme 210, 212 von Brennstoff und Oxidator in dieser Phase deutlich gegenüber den Massenströmen 210, 212 in Figur 4 erhöht werden.

### Bezugszeichen

- 10: Hochdruckkammer
- 12: Kolben
- 14: Treibstoffgel
- 16: Gel-Treibstofftank
- 20: Regelventil
- 30: Brennkammer
- 32: Injektor
- 40: Verbrennungsgasstrom
- 100: Antriebsvorrichtung
- 110: Gehäuse
- 120: Kolbenbetätigungseinheit
- 122: Druckerzeugungseinheit
- 124: Druckkammer
- 130: Brennstofftank
- 132: Brennstoffgel
- 134: Kolben
- 136: Regelventil
- 140: Oxidatortank
- 142: Oxidatorgel
- 144: Kolben
- 146: Regelventil
- 150: Wassereinlauf
- 152: Wasserzuführungskanal
- 154: Wassereintritt Brennkammer
- 156: Wassereintritt Brennkammer
- 158: Wassereinlassaktor
- 160: Injektorkopf
- 162: Zünder
- 164: Zünder
- 166: Gasleitrohr
- 166: Zünder
- 170: Brennkammer
- 172: primäre Verbrennungszone
- 174: sekundäre Verbrennungszone
- 176: Mischzone
- 178: Schubdüse
- 180: Verbrennungsgasstrom
- 190: Tankeinheit
- 192: Gel-Gasgenerator
- 200: Anfangs-Beschleunigungsphase
- 202: Reisephase
- 204: Beschleunigungsphase
- 210: Brennstoff-Massenstrom
- 212: Oxidator-Massenstrom
- 214: Wasser-Massenstrom
- 300: Unterwassertransportgerät

## Patentansprüche

1. Antriebsvorrichtung (100) eines Unterwassertransportgeräts (300), umfassend wenigstens einen Tank (130, 140) mit einem gelförmigen Raketentreibstoff mit wenigstens einem Brennstoffgel (132) und einem Oxidatorgel (142), mit einer Brennkammer (170), die in einer Schubdüse (178) endet,
**dadurch gekennzeichnet, dass** wenigstens ein Wassereinlass (154, 156) in eine sekundäre Verbrennungszone (174) und/oder in eine Mischzone (176) mit einem Wassereinlassaktor (158) abhängig von einer Geschwindigkeit des Unterwassertransportgeräts (300) einstellbar ist.

2. Antriebsvorrichtung nach Anspruch 1, **dadurch gekennzeichnet, dass** der Schubdüse (178) ein diergoler Gel-Dualmode-Gasgenerator (192) oder eine Gel-Dualmode-Treibstoffförderung für das Brennstoffgel (132) und das Oxidatorgel (142) vorgeschaltet ist.

3. Antriebsvorrichtung nach Anspruch 1 oder 2, umfassend separate, unabhängig voneinander betreibbare Regelventile (136, 146) zur Zufuhr von Brennstoffgel (132) und zur Zufuhr von Oxidatorgel (142) zu der Brennkammer (170).

4. Antriebsvorrichtung nach einem der vorhergehenden Ansprüche, **dadurch gekennzeichnet, dass** der Treibstoff aus Brennstoffgel (132) und das Oxidatorgel (142) in separaten Tanks (130, 140) angeordnet sind, insbesondere dass der eine der Tanks (130, 140) den anderen der Tanks (130, 140) konzentrisch umgibt.

5. Antriebsvorrichtung nach dem vorhergehenden Anspruch, **dadurch gekennzeichnet, dass** eine Kolbenbetätigungseinheit (120) zur Betätigung von Kolben (134, 144) in dem wenigstens einen Tank (130, 140) angeordnet ist, insbesondere dass die Kolbenbetätigungseinheit (120) eine Druckgaserzeugungseinheit (122) und eine Druckkammer (124) aufweist.

6. Antriebsvorrichtung nach einem der vorhergehenden Ansprüche, **dadurch gekennzeichnet, dass** die Brennkammer (170) einen Injektorkopf (160), zumindest eine primäre Verbrennungszone (172) und die Mischzone (176) umfasst.

7. Antriebsvorrichtung nach Anspruch 6, **dadurch gekennzeichnet, dass** die sekundäre Verbrennungszone (174) zwischen primärer Verbrennungszone (172) und Mischzone (176) angeordnet ist.

8. Antriebsvorrichtung nach einem der vorhergehenden Ansprüche, **dadurch gekennzeichnet, dass** wenigstens der Wassereinlass (154, 156) in wenigstens eine Zone (174, 176) der Brennkammer (170) vorhanden ist.

9. Unterwassertransportgerät (300) mit einer Antriebsvorrichtung (100) nach einem der vorhergehenden Ansprüche, wobei die Antriebsvorrichtung (100) als Staustrahltriebwerk mit einem diergolen Gel-Dualmode-Gasgenerator (192) oder einer Gel-Dualmode-Treibstoffförderung mit Brennstoffgel (132) und einem Oxidatorgel (142) zum Antrieb mit einem diergolen Raketentreibstoff ausgebildet ist.

10. Unterwassertransportgerät nach Anspruch 9, mit separaten, unabhängig voneinander betreibbaren Regelventilen (136, 146) zur Zufuhr von Brennstoffgel (132) und zur Zufuhr von Oxidatorgel (142) zu einer Brennkammer (170) der Antriebsvorrichtung (100).

11. Verwendung eines Unterwassertransportgeräts (300) nach Anspruch 9 oder 10 mit einem gelförmigen, diergolen Raketentreibstoff, der ein Brennstoffgel (132) und ein Oxidatorgel (142) aufweist, zum Antrieb des Unterwassertransportgeräts.

12. Verwendung nach Anspruch 11, wobei das Brennstoffgel (132) wenigstens einen metallhaltigen Zusatz, insbesondere einen wasserreagierenden metallhaltigen Zusatz, aufweist.

13. Verwendung nach Anspruch 12, wobei der metallhaltige Zusatz Metallpartikel, insbesondere Magnesiumpartikel und/oder Aluminiumpartikel, und/oder Metallhydrid umfasst, insbesondere Aluminiumhydrid und/oder Lithiumhydrid.

14. Verwendung nach einem der Ansprüche 11 bis 13, wobei der Treibstoff als Brennstoffgel (132) wenigstens einen Kohlenwasserstoff, insbesondere n-Heptan und/oder Kerosin, aufweist.

15. Verwendung nach einem der vorhergehenden Ansprüche 11 bis 14, wobei der Treibstoff wenigstens ein Oxidatorgel (142), insbesondere Wasserstoffperoxid und/oder ionische Liquide auf der Basis von Ammoniumdinitramid und/oder Hydroxylammoniumnitrat, aufweist.

## Claims

1. Drive device (100) for an underwater transport device (300), comprising at least one tank (130, 140) with a rocket fuel in gel form comprising at least one fuel gel (132) and an oxidizer gel (142), with a combustion chamber (170) ending in a thrust nozzle (178), **characterized in that** at least one water inlet (154, 156) into a secondary combustion zone (174) and/or a mixing zone (176) is adjustable using a water inlet actuator (158), depending on a speed of the underwater transport device (300).

2. Drive device according to Claim 1, **characterized in that** a diergolic gel dual-mode gas generator (192) or a gel dual-mode fuel injection for the fuel gel (132) and the oxidizer gel (142) is positioned upstream of the thrust nozzle (178).

3. Drive device according to Claim 1 or 2, comprising separate control valves (136, 146) for the supply of fuel gel (132) and for the supply of oxidizer gel (142) to the combustion chamber (170) that can be operated independently of one another.

4. Drive device according to any of the preceding claims, **characterized in that** the propellant made up of fuel gel (132) and the oxidizer gel (142) are arranged in separate tanks (130, 140), in particular **in that** one of the tanks (130, 140) concentrically surrounds the other of the tanks (130, 140).

5. Drive device according to the preceding claim, **characterized in that** a piston actuation unit (120) to actuate pistons (134, 144) is arranged in the at least one tank (130, 140), in particular **in that** the piston actuation unit (120) includes a pressure generation unit (122) and a pressure chamber (124).

6. Drive device according to any of the preceding claims, **characterized in that** the combustion chamber (170) comprises an injector head (160), at least one primary combustion zone (172), and the mixing zone (176).

7. Drive device according to Claim 6, **characterized in that** the secondary combustion zone (174) is arranged between the primary combustion zone (172) and the mixing zone (176).

8. Drive device according to any of the preceding claims, **characterized in that** at least the water inlet (154, 156) is present in at least one zone (174, 176) of the combustion chamber (170).

9. Underwater transport device (300) with a drive device (100) according to any of the preceding claims, wherein the drive device (100) is designed as a ramjet engine with a diergolic gel dual-mode gas generator (192) or gel dual-mode fuel injection with fuel gel (132) and an oxidizer gel (142) for driving with a diergolic rocket fuel.

10. Underwater transport device according to Claim 9, with separate control valves (136, 146) for the supply of fuel gel (132) and for the supply of oxidizer gel (142) to a combustion chamber (170) of the drive device (100) that can be operated independently of one another.

11. Use of an underwater transport device (300) according to Claim 9 or 10 with a diergolic rocket fuel in gel form comprising a fuel gel (132) and an oxidizer gel (142) for driving the underwater transport device.

12. Use according to Claim 11, wherein the fuel gel (132) includes at least one metal additive, in particular a water-reactive metal additive.

13. Use according to Claim 12, wherein the metal additive includes metal particles, in particular magnesium particles and/or aluminium particles, and/or metal hydride, in particular aluminium hydride and/or lithium hydride.

14. Use according to any of Claims 11 to 13, wherein the propellant, as fuel gel (132), includes at least one hydrocarbon, in particular n-heptane and/or kerosene.

15. Use according to any of the preceding Claims 11 to 14, wherein the propellant includes at least one oxidizer gel (142), in particular hydrogen peroxide and/or ionic liquids based on ammonium dinitramide and/or hydroxylammonium nitrate.

## Revendications

1. Dispositif d'entraînement (100) d'un engin de transport sous-marin (300), comprenant au moins un réservoir (130, 140) avec un propergol sous forme de gel avec au moins un gel combustible (132) et un gel oxydant (142), avec une chambre de combustion (170) se terminant par une tuyère de propulsion (178)
**caractérisé en ce qu'**au moins une entrée d'eau (154, 156) dans une zone de combustion secondaire (174) et/ou dans une zone de mélange (176) est réglable avec un actionneur d'entrée d'eau (158) en fonction d'une vitesse de l'engin de transport sous-marin (300).

2. Dispositif d'entraînement selon la revendication 1, **caractérisé en ce qu'**un générateur de gaz bimode à gel diergol (192) ou un système de transport de carburant bimode à gel pour le gel combustible (132) et le gel oxydant (142) est monté en amont de la tuyère de propulsion (178).

3. Dispositif d'entraînement selon la revendication 1 ou 2, comprenant des soupapes de régulation séparées (136, 146) pouvant fonctionner indépendamment les unes des autres pour l'amenée de gel combustible (132) et de gel oxydant (142) à la chambre de combustion (170).

4. Dispositif d'entraînement selon l'une quelconque des revendications précédentes, **caractérisé en ce que** le carburant composé de gel combustible (132) et le gel oxydant (142) sont agencés dans des réservoirs séparés (130, 140), notamment **en ce que** l'un des réservoirs (130, 140) entoure concentriquement l'autre des réservoirs (130, 140).

5. Dispositif d'entraînement selon la revendication précédente, **caractérisé en ce qu'**une unité d'actionnement de piston (120) destinée à actionner des pistons (134, 144) est agencée dans l'au moins un réservoir (130, 140), notamment de telle sorte que l'unité d'actionnement de piston (120) présente une unité de production de gaz comprimé (122) et une chambre de pression (124).

6. Dispositif d'entraînement selon l'une quelconque des revendications précédentes, **caractérisé en ce que** la chambre de combustion (170) comprend une tête d'injecteur (160), au moins une zone de combustion primaire (172) et la zone de mélange (176).

7. Dispositif d'entraînement selon la revendication 6, **caractérisé en ce que** la zone de combustion secondaire (174) est agencée entre la zone de combustion primaire (172) et la zone de mélange (176).

8. Dispositif d'entraînement selon l'une quelconque des revendications précédentes, **caractérisé en ce qu'**au moins l'entrée d'eau (154, 156) est présente dans au moins une zone (174, 176) de la chambre de combustion (170).

9. Engin de transport sous-marin (300) avec un dispositif d'entraînement (100) selon l'une quelconque des revendications précédentes, dans lequel le dispositif d'entraînement (100) est réalisé sous forme de statoréacteur avec un générateur de gaz bimode à gel diergol (192) ou un système de transport de carburant bimode à gel avec un gel combustible (132) et un gel oxydant (142) pour l'entraînement avec un propergol diergol.

10. Engin de transport sous-marin selon la revendication 9, avec des soupapes de régulation séparées (136, 146) pouvant fonctionner indépendamment les unes des autres pour l'amenée de gel combustible (132) et pour l'amenée de gel oxydant (142) à une chambre de combustion (170) du dispositif d'entraînement (100).

11. Utilisation d'un engin de transport sous-marin (300) selon la revendication 9 ou 10 avec un propergol diergol sous forme de gel présentant un gel combustible (132) et un gel oxydant (142) pour entraîner l'engin de transport sous-marin.

12. Utilisation selon la revendication 11, dans laquelle le gel combustible (132) présente au moins un additif contenant un métal, notamment un additif contenant un métal réagissant avec l'eau.

13. Utilisation selon la revendication 12, dans laquelle l'additif contenant un métal comprend des particules métalliques, notamment des particules de magnésium et/ou des particules d'aluminium, et/ou un hydrure métallique, notamment un hydrure d'aluminium et/ou un hydrure de lithium.

14. Utilisation selon l'une quelconque des revendications 11 à 13, dans laquelle le carburant présente en tant que gel combustible (132) au moins un hydrocarbure, notamment du n-heptane et/ou du kérosène.

15. Utilisation selon l'une quelconque des revendications 11 à 14 précédentes, dans laquelle le carburant présente au moins un gel oxydant (142), notamment du peroxyde d'hydrogène et/ou des liquides ioniques à base de dinitramide d'ammonium et/ou de nitrate d'hydroxylammonium.
